## Europäisches Patentamt
## European Patent Office
## Office européen des brevets

(19)

(11) Publication number: **0 228 173**
**B1**

(12)

# EUROPEAN PATENT SPECIFICATION

(45) Date of publication of the patent specification:
**07.03.90**

(51) Int. Cl.⁴: **G01F 23/16**

(21) Application number: **86308868.8**

(22) Date of filing: **13.11.86**

(54) Apparatus for indicating fluid level.

(30) Priority: **16.12.85 US 809228**

(43) Date of publication of application:
**08.07.87 Bulletin 87/28**

(45) Publication of the grant of the patent:
**07.03.90 Bulletin 90/10**

(84) Designated Contracting States:
**DE FR GB IT**

(56) References cited:
**GB-A- 1 271 907**
**US-A- 4 019 387**
**US-A- 4 373 388**
**US-A- 4 409 833**

(73) Proprietor: **GENERAL MOTORS CORPORATION,
General Motors Building 3044 West Grand Boulevard,
Detroit Michigan 48202(US)**

(72) Inventor: **Fales, Douglas I., 2367 Melody Lane, Burton
Michigan 48509(US)**

(74) Representative: **Denton, Michael John et al, Patent
Section - Luton Office (F6) Vauxhall Motors Limited P.O.
Box 3 Kimpton Road, Luton Bedfordshire LU2 0SY(GB)**

ACTORUM AG

## Description

This invention relates to an apparatus for indicating the level of fluid in a tank or other container.

The fluid pressure at the bottom of a container is directly related to the height of fluid in the container and the density of the fluid. If the density of the fluid is known, the level of fluid in the container can then be determined from the fluid pressure at the bottom of the container. It has been proposed in US patent no. 4,373,388 to provide for a fluid level sensor in which the fluid pressure at the bottom of the container is monitored as an indication of fluid level. However, the variation in fluid pressure in response to changes in fluid level are very small thereby requiring a highly sensitive pressure gauge to detect changes in fluid pressure so as to provide a measure of fluid level. A pressure gauge having the required sensitivity would be very costly and would typically prohibit this form of fluid level sensing in many applications.

The object of the present invention is to provide an apparatus to measure the level of fluid in a container based on the fluid pressure at the bottom of the container and wherein a pressure gauge is used that does not require high sensitivity.

To this end, an apparatus in accordance with the present invention is as specified in Claim I.

Thus, an apparatus for indicating the level of fluid in a container is provided that measures the fluid level in the container based on the fluid pressure at the bottom of the container. By the use of a pressure amplifier including a high pressure source such as the fluid pump for pumping fluid from the container, fluid pressure changes over a wide range as the fluid level varies thereby allowing the use of a pressure gauge having less sensitivity.

The invention may be best understood by reference to the following description of a preferred embodiment and the accompanying drawings, in which:-

Figure I is a diagram illustrating an apparatus incorporating the principles of this invention; and

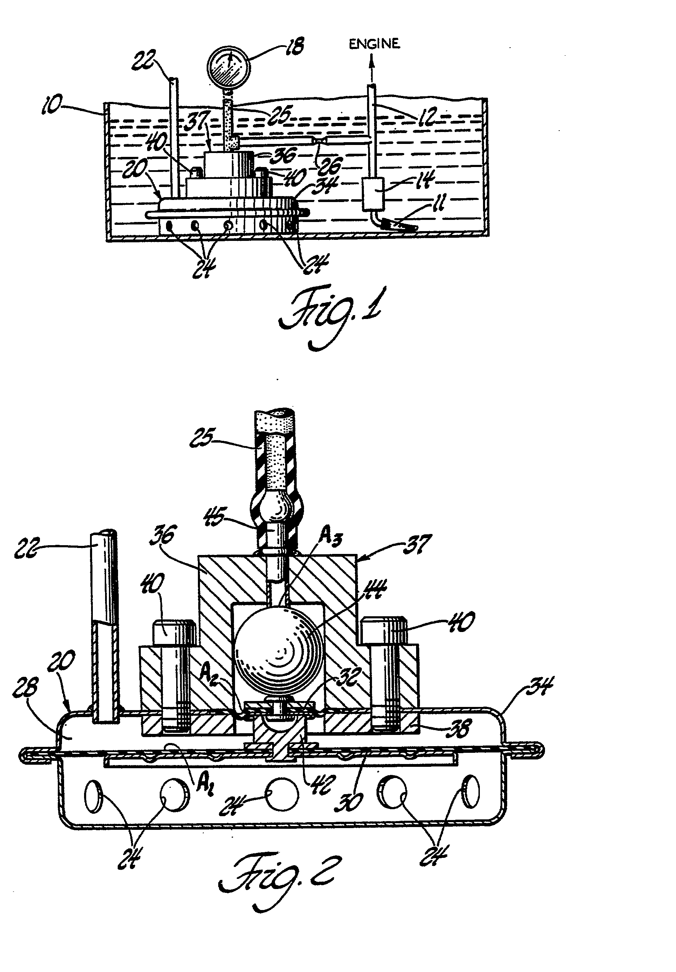

Figure 2 is a diagram illustrating the pressure amplifier of Figure I.

Referring to Figure I, the invention is illustrated with respect to a container in the form of a vented fuel tank I0 from which fuel is delivered to a vehicle engine (not shown) through an intake, including a filter element II, at the bottom of the vented fuel tank and a fuel line I2 by means of a fluid pump in the form of an electric fuel pump I4. The electric fuel pump I4, which is of the known type, is positioned in the vented fuel tank I0 and is energized via electric leads (not illustrated) to deliver fuel under pressure to the vehicle engine.

A fuel gauge to monitor the level of fuel in the vented fuel tank I0 takes the form of a pressure gauge I8 to which fuel at a fluid pressure related to the level of the fuel in the vented fuel tank I0 is applied. A pressure amplifier 20 is positioned at the bottom of the vented fuel tank I0 so as to be exposed to the fluid pressure that is related to the level of fuel in the vented fuel tank I0. The pressure amplifier 20 is vented to the atmosphere via a conduit 22. Fuel at the fluid pressure related to its level in the vented fuel tank I0 is admitted to the pressure amplifier 20 via openings 24 therein.

The output of the pressure amplifier 20 is an amplified fuel pressure that is coupled to the pressure gauge I8 through an output pressure line 25. The operating pressure for the pressure amplifier 20 is provided by the electric fuel pump I4. This is accomplished by coupling the pressurized fuel output of the electric fuel pump I4 to the output pressure line 25 via a fluid flow restrictor in the form of an orifice 26. As will be described with respect to Figure 2, the pressure in the output pressure line 25, and which is sensed by the pressure gauge I8, is modulated by the pressure amplifier 20 to a value equal to $KP_f$ where K is the gain of the pressure amplifier 20 and $P_f$ is the fluid pressure of the fuel dependent upon the level of fuel in the vented fuel tank I0.

Referring to Figure 2, the pressure amplifier 20 includes an air chamber 28 formed by opposed first and second diaphragms 30 and 32 respectively and a casing 34. The first diaphragm 30 is captured by crimping the casing 34 which seals the air chamber 28 from the fuel entering the casing via the openings 24. The second diaphragm 32 and casing 34 are captured by a housing 36 of a valve defined by a ball valve 37 and an opposing member 38 such as by threaded bolts 40 to seal the air chamber 28 from fuel entering the interior of the housing 36 through openings (not shown) provided therein. A spacer 42 is carried by the first diaphragm 30 and engages the second diaphragm 32. The air chamber 28 is vented to atmospheric pressure via the conduit 22 previously described.

The ball valve 37 includes a movable valve member defined by a ball 44 within the housing 36 that cooperates with a valve seat formed by the end of a tubular fitting 45 extending through the top of the housing 36 to form the ball valve. The output pressure line 25 is pushed over the external end of the tubular fitting 45 to establish fluid communication with the ball valve 37. The ball 44 is engaged by the second diaphragm 32 at a point diametrically opposite the valve seat formed by the end of the tubular fitting 45 for movement therewith, movement of the second diaphram 32 upward tending to close the ball valve 37 and movement downward opening the ball valve 37.

Fuel at a fluid pressure dependent upon its level in the vented fuel tank I0 applies a fluid pressure on the bottom side of the first diaphragm 30 tending to displace the first diaphragm 30 in an upward direction against the spacer 42. Fuel at the same fluid pressure is applied to the upper side of the second diaphragm 32 through openings (not shown) tending to displace the second diaphragm 32 in a downward direction against the spacer 42. The area $A_1$ of the first diaphragm 30 is greater than the area $A_2$ of the second diaphragm 32 resulting in a net force tending to displace both the first and second diaphragms 30 and 32 and the ball 44 engaged by second diaphragm 32 in an upward direction to close the ball valve 37. An opposing force acting on the ball 44 tending to displace the ball 44 downward to open the ball valve 37 is created by the fluid pressure in the output pressure line 25 acting on the ball 44 over the area $A_3$ of the terminal end of the tubular fitting 45. The spacer 42 thereby acts as transmitting means for transmitting the net force exerted by the fuel on the first and second diaphragms 30,32, to the ball 44.

The net effect of the forces acting on the ball 44 is to regulate the fluid pressure in the output pressure line 25 to a fluid pressure that is equal to the fluid pressure of the fuel at the bottom of the vented fuel tank l0 times the gain K of the pressure amplifier 20. The gain K can be determined by summing the forces acting on the ball 44 of the ball valve 37.

The forces acting on the ball 44 is defined by the following equation:

$$P_gA_3 = P_fA_1 - P_fA_2 + P_fA_3 - W \qquad (1)$$

where $P_g$ is the pressure per unit area in the output pressure line 25 sensed by the pressure gauge l8, $P_f$ is the fluid pressure per unit area at the bottom of the vented fuel tank l0, $A_1$ is the area of the first diaphragm 30, $A_2$ is the area of the second diaphragm 32, $A_3$ is the area of the end of the tubular fitting 45 and W is the weight of the ball 44. If the specific gravity of the ball 44 is substantially equal to that of the fuel and if the area $A_3$ is substantially less than the area $A_1$, the following equation for the fluid pressure sensed by the pressure gauge l8 results:

$$P_g = P_f(A_1-A_2)/A_3 \ . \qquad (2)$$

Any errors that may result from the foregoing assumptions relating to the ball weight and area $A_3$ can be compensated for via calibration of the pressure gauge l8.

As can be seen from equation (2) the gain K of the pressure amplifier 20 is equal to $(A_1-A_2)/A_3$. By making $A_2$ smaller than $A_1$ and by making $A_3$ smaller than the difference between $A_1$ and $A_2$, the gain K of the pressure amplifier 20 can be made much greater than unity so that the fluid pressure in the output pressure line 25 at the output of the pressure amplifier 20 is much greater than the fluid pressure at the bottom of the vented fuel tank l0. By amplifying the fluid pressure in the foregoing manner, a wide range of fluid pressures is provided to the fuel gauge in response to the limited range of fluid pressures as the fuel quantity in the vented fuel tank l0 varies from full to empty. This expanded range allows the use of a pressure gauge l8 that is not highly sensitive to small pressure changes and therefore more economical while yet providing an accurate indication of fuel remaining in the vented fuel tank l0.

## Claims

l. An apparatus for indicating the level of fluid in a container (l0), the apparatus comprising: a pressure gauge (l8) responsive to the fluid pressure in an output pressure line (25) for providing a measure of the fluid level in the container; and a fluid pump (l4) for pumping fluid under pressure from the container; characterised by a pressure amplifier (20) comprising a casing (34) disposed at the bottom of the container and having opposed surfaces; first (30) and second (32) diaphragms carried by the opposed surfaces of the casing, the casing and the first and second diaphragms forming an air chamber (28) isolated from the fluid, the external surfaces of the air chamber being exposed to the fluid pressure at the bottom of the container, the fluid exerting a force equal to $A_1P_f$ on the first diaphragm and an opposing force $A_2P_f$ on the second diaphragm, where $A_1$ is the area of the first diaphragm, $A_2$ is the area of the second diaphragm and $P_f$ is the fluid pressure per unit area at the bottom of the container and which is proportional to the level of the fluid in the container; a valve (37) including a movable valve member (44) and a valve seat (45) having an area $A_3$; transmitting means (42) for transmitting the net force $P_f(A_1-A_2)$ exerted by the fluid on the first and second diaphragms to the movable valve member in a sense tending to seat the movable valve member against the valve seat; in that the output pressure line is coupled between the pressure gauge and the valve seat, the output pressure line being vented to the container when the movable valve member is unseated from the valve seat; and by a fluid flow restrictor (26) coupled between the fluid pump and the output pressure line to pressurize the output pressure line, the fluid pressure in the output pressure line generating a force equal to $P_gA_3$ on the movable valve member tending to unseat the movable valve member from the valve seat, where $P_g$ is equal to the fluid pressure per unit area of the fluid in the output pressure line, the movable valve member being moved by the forces acting thereon to modulate the fluid pressure per unit area $P_g$ in the output pressure line to a value substantially equal to $P_f(A_1-A_2)/A_3$.

2. An apparatus according to claim l, wherein the area $A_1$ of the first diaphragm (30) is greater than the area $A_2$ of the second diaphragm (32) and the area $A_3$ is less than the difference $A_1-A_2$ so that the fluid pressure in the output pressure line (25) is greater than the fluid pressure at the bottom of the container (l0).

## Patentansprüche

1. Vorrichtung zum Anzeigen des Fluidstandes in einem Behälter (10), mit: einem auf den Fluiddruck in einer Ausgangsdruckleitung (25) reagierenden Druckmesser (18), um ein Maß des Fluidstandes in dem Behälter zu schaffen; und einer Fluidpumpe (14) zum Pumpen von Druckfluid aus dem Behälter, gekennzeichnet durch einen Druckverstärker (20), der ein an dem Boden des Behälters angeordnetes Gehäuse (34) umfaßt, das einander entgegengesetzt liegende Flächen besitzt, sowie erste (30) und zweite (32) Membranen, die durch die entgegengesetzt liegenden Flächen des Gehäuses gehalten sind, wobei das Gehäuse und die ersten und zweiten Membranen eine von dem Fluid isolierte Luftkammer (28) bilden, die Außenflächen der Luftkammer dem Fluiddruck am Boden des Behälters ausgesetzt sind, das Fluid eine Kraft gleich $A_1P_f$ auf die erste Membran und eine entgegengesetzt wirkende Kraft $A_2P_f$ auf die zweite Membran ausübt, wobei $A_1$ die Fläche der ersten Membran, $A_2$ die Fläche der zweiten Membran und $P_f$ der der dem Fluidstand im Behälter proportionale Fluiddruck pro Einheitsfläche am Boden des Behälters ist; durch ein Ventil (37), das ein bewegbares Ventilelement (44) und einen Ventilsitz (45) mit einer Fläche $A_3$ enthält, Übertragungsmittel (42) zum Übertragen der durch das Fluid auf die erste und zweite Membran ausgeübten resultierenden Kraft $P_f(A_1-A_2)$ auf das bewegbare Ventilelement in einem Richtungssinn, der danach trachtet, das bewegbare Ventilelement gegen den Ventilsitz anzusetzen; und dadurch, daß die Druckausgangsleitung zwischen dem Druckmesser und dem Ventilsitz angeschlossen ist, wobei die Ausgangsdruckleitung zu dem Behälter entlüftet ist, wenn das bewegbare Ventilelement vom Ventilsitz abgehoben ist; und durch einen zwischen der Fluidpumpe und der Ausgangsdruckleitung angeschlossenen Strömungsbegrenzer (26), um die Ausgangsdruckleitung unter Druck zu setzen, wobei der Fluiddruck in der Ausgangsdruckleitung eine Kraft gleich $P_gA_3$ auf das bewegbare Ventilelement ausübt, die danach trachtet, das bewegbare Ventilelement von dem Ventilsitz abzuheben, wobei $P_g$ gleich dem Fluiddruck pro Einheitsfläche des Fluides in der Ausgangsdruckleitung ist, das bewegbare Ventilelement durch die darauf einwirkenden Kräfte bewegt wird, den Fluiddruck pro Einheitsfläche $P_g$ in der Ausgangsdruckleitung auf einen Wert im wesentlichen gleich $P_f(A_1-A_2)/A_3$ zu modulieren.

2. Vorrichtung nach Anspruch 1, bei der die Fläche $A_1$ der ersten Membrane (30) größer als die Fläche $A_2$ der zweiten Membrane (32) ist und die Fläche $A_3$ kleiner als die Differenz $A_1-A_2$ ist, so daß der Fluiddruck in der Ausgangsdruckleitung (25) größer als der Fluiddruck am Boden des Behälters (10) ist.

## Revendications

1. Appareil pour indiquer le niveau de fluide dans un conteneur (10), cet appareil comprenant: un manomètre (18) sensible à la pression de fluide dans un conduit (25) de sortie de pression pour fournir une mesure du niveau de fluide dans le conteneur; et une pompe à fluide (14) pour pomper du fluide sous pression en provenance du conteneur, caractérisé par un amplificateur de pression (20) comprenant un boîtier (34) disposé au fond du conteneur et ayant des surfaces opposées; une première et une seconde membranes (30, 32) portées par les surfaces opposées du boîtier, le boîtier et la première et la seconde membranes formant une chambre d'air (28) isolée du fluide, les surfaces externes de la chambre d'air étant exposées à la pression de fluide au fond du conteneur, le fluide excerçant une force égale à $A_1P_f$ sur la première membrane et une force antagoniste $A_2P_f$ sur la seconde membrane, où $A_1$ est la surface de la première membrane, $A_2$ est la

surface de la seconde membrane et $P_f$ est la pression du fluide par unité de surface au fond du conteneur, qui est proportionnelle au niveau du fluide dans ce conteneur; un clapet (37) comprenant un obturateur mobile (44) et un siège de clapet (45) ayant une surface $A_3$; un dispositif (42) de transmission pour transmettre à l'obturateur mobile la force nette $P_f(A_1-A_2)$ excercée par le fluide sur les première et seconde membranes, dans un sens tendant à appliquer l'obturateur contre le siège; en ce que le conduit de sortie de pression est couplé entre le manomètre et le siège de clapet, le conduit de sortie de pression étant mis en communication avec le conteneur lorsque l'obturateur mobile est écarté du siège du clapet; et par un limiteur de débit de fluide (26) couplé entre la pompe à fluide et le conduit de sortie de pression pour mettre sous pression le conduit de sortie de pression, la pression du fluide dans le conduit de sortie de pression engendrant une force égale à $P_gA_3$ sur l'obturateur mobile, tendant à écarter ce dernier de son siège, où $P_g$ est égal à la pression de fluide par unité de surface du fluide dans le conduit de sortie de pression, l'obturateur mobile étant déplacé par les forces agissant sur lui afin de moduler la pression du fluide par unité de surface $P_g$ dans le conduit de sortie de pression à une valeur pratiquement égale à $P_f(A_1-A_2)/A_3$.

2. Appareil suivant la revendication 1, dans lequel la surface $A_1$ de la première membrane (30) est supérieure à la surface $A_2$ de la seconde membrane (32) et la surface $A_3$ est inférieure à la différence $A_1-A_2$ de sorte que la pression de fluide dans le conduit (25) de sortie de pression est supérieure à la pression de fluide au fond du conteneur (10).

Fig. 1

Fig. 2